# EUROPEAN PATENT APPLICATION

(11) **EP 1 826 508 A2**
(43) Date of publication of application: **29.08.2007**
(21) Application number: 07003563.9
(22) Date of filing: 21.02.2007
(51) Int. Cl.: F25B 5/04, F25B 9/00, B60H 1/32, F25B 40/00

(54) **Air conditioning system**

(30) Priority: 22.02.2006 JP 2006045092
(71) Applicant: DENSO CORPORATION, Kariya-city, Aichi-pref. 448-8661 (JP)
(72) Inventor: Itoh, Satoshi, Kariya-City Aichi-Pref. 448-8661 (JP)
(74) Representative: Klingseisen, Franz

(57) **Abstract**

An air conditioning system comprising: a compressor (11) for compressing refrigerant; a gas cooler (12) cooling the refrigerant discharged from the compressor; an expansion valve (14) reducing the pressure of the refrigerant flowing from the gas cooler; and a plurality of evaporators (15,16) vaporizing the refrigerant flowing from the expansion valve. The evaporators are connected in series, and operate independently of each other with air being caused to flow by the action of blowers.

## Description

### BACKGROUND OF THE INVENTION

### 1. Field of the Invention

The present invention relates to an air conditioning system in which refrigerant is supplied to a plurality of evaporators, and more particularly to an air conditioning system that is advantageously applied for automotive use.

### 2. Description of the Related Art

An automotive air conditioning system for a large passenger car having a large interior is required to have a correspondingly large capacity. Air conditioning systems for such cars have often changed from the single air conditioner type in which the air conditioning unit is installed only in the front seat area to a dual air conditioning type in which air conditioning units are installed in both the front seat and rear seat areas.

In the refrigeration cycle of such a dual air conditioning system, air conditioning units each having a dedicated evaporator are connected in parallel and disposed in the front seat and rear seat areas, respectively. A common compressor and a common condenser are shared between the air conditioning units. In recent years, an air conditioning system has been proposed that uses a common expansion valve in order to avoid an increase in cost, but this system requires the use of a flow control valve for selectively distributing the refrigerant to the respective evaporators (refer to Japanese Unexamined Patent Publication No. 2005-106318).

### SUMMARY OF THE INVENTION

In view of the above problem, it is an object of the present invention to provide an air conditioning system equipped with a plurality of evaporators and yet having a simple refrigeration cycle.

To solve the above problem, an air conditioning system according to a first aspect of the present invention comprises: a compressor (11) for compressing refrigerant; a gas cooler (12) for cooling the refrigerant discharged from the compressor (11); an expansion valve (14) for reducing the pressure of the refrigerant flowing from the gas cooler (12); and a plurality of evaporators (15, 16), connected in series and operable independently of each other, for vaporizing the refrigerant flowing from the expansion valve (14). This achieves an air conditioning system which, despite the provision of a plurality of evaporators, is simple in construction and does not require the use of extra parts such as a flow control valve, and therefore manufacturing cost can be reduced.

According to a second aspect of the present invention, the opening of the expansion valve (14) is adjusted based on the outlet temperature of the gas cooler (12). In this way, by controlling the expansion value on the high-pressure side, stable control can be performed.

According to a third aspect of the present invention, the air conditioning system further comprises a tank for storing surplus refrigerant, the tank being disposed on the high-pressure side between the expansion valve and the compressor.

According to a fourth aspect of the present invention, since the refrigerant is a fluid that reaches a supercritical pressure in the gas cooler, an environmentally friendly refrigerant such as CO₂ can be used.

According to a fifth aspect of the present invention, the plurality of evaporators are respectively provided with blowers, which are controlled independently of each other. As a result, the air conditioning units can be turned on and off by turning on and off the respective blowers.

According to a sixth aspect of the present invention, the air conditioning system is used for air-conditioning a vehicle, the plurality of evaporators comprises a first evaporator (15) and a second evaporator (16), the first evaporator (15) is installed so as to air-condition a sub-air-conditioning space in the vehicle, and the second evaporator (16) is installed so as to air-condition a main air-conditioning space in the vehicle. According to a seventh aspect of the present invention, the main air-conditioning space is the front seat space in the vehicle, and the sub-air-conditioning space is the rear seat space in the vehicle. Further, according to an eighth aspect of the present invention, the first evaporator (15) is located upstream of the second evaporator (16) in the flow of the refrigerant. With this arrangement, pressure loss can be reduced when the first evaporator is used as a refrigerant passage.

According to a ninth aspect of the present invention, the air conditioning system further comprises an internal heat exchanger for exchanging heat between high-pressure refrigerant and low-pressure refrigerant.

The numerals in parentheses above are given to indicate correspondences with specific components to be described later with reference to the embodiments given herein. The numerals are not intended to limit the present invention.

### BRIEF DESCRIPTION OF THE DRAWINGS

These and other objects and features of the present invention will become clearer from the following description of the preferred embodiments given with reference to the attached drawings, wherein:
FIG. 1 is a diagram showing the refrigeration cycle of an air conditioning system according to one embodiment of the present invention;
FIG. 2 is a diagram showing an automotive air conditioning system according to one embodiment of the present invention;
FIG. 3 is a diagram showing an air-conditioning ECU in the automotive air conditioning system;
FIG. 4 is a diagram for explaining the refrigeration cycle for the case where both series-connected evaporators are operated;
FIG. 5 is a diagram for explaining the refrigeration cycle for the case where one of the series-connected evaporators is operated; and
FIG. 6 is a diagram showing an activation flow of the automotive air conditioning system.

### DESCRIPTION OF THE PREFERRED EMBODIMENTS

Embodiments of the present invention will be described below with reference to the drawings.

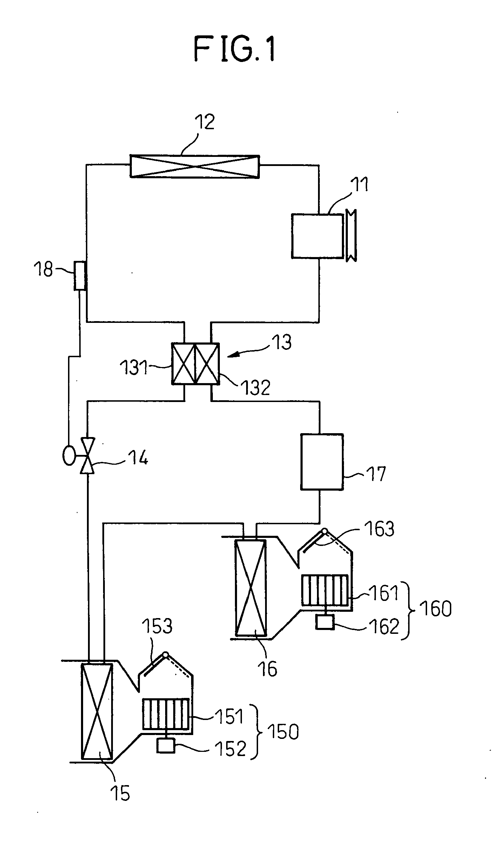

FIG. 1 shows the refrigeration cycle used in one embodiment of the present invention. The refrigerant in the refrigeration cycle can be, for example, a material such as carbon dioxide (CO₂) that becomes a supercritical fluid. The refrigeration cycle comprises: a compressor 11 for compressing the refrigerant to produce a high-pressure refrigerant; a gas cooler 12 as a condenser for cooling the refrigerant compressed by the compressor 11; an internal heat exchanger 13 for exchanging heat between the high-pressure refrigerant being delivered from the gas cooler 12 and the low-pressure refrigerant being sucked into the compressor 11; an expansion valve 14 for reducing the pressure of the high-pressure refrigerant passed through the internal heat exchanger 13; a first evaporator 15 and a second evaporator 16 connected in series for vaporizing the low-pressure, low-temperature refrigerant sprayed from the expansion valve 14; and an accumulator 17 including a tank to store surplus refrigerant for separating a liquid from the refrigerant flowing from the second evaporator 16.

The internal heat exchanger 13, which performs heat exchange, comprises a high-pressure-side passage 131 where the high-pressure refrigerant passes and a low-pressure-side passage 132 where the low-pressure refrigerant passes.

The opening of the expansion valve 14 is adjusted based on a signal supplied from a sensor 18 which detects the pressure and temperature on the outlet side of the gas cooler 12. The opening of the expansion valve 14 is adjusted based on the refrigerant temperature on the outlet side of the gas cooler 12 so that the pressure on the outlet side of the gas cooler 12 is regulated at such a level so as to achieve maximum COP (Coefficient of Performance). More specifically, as the detected temperature rises, the opening is reduced to increase the refrigerant pressure on the outlet side of the gas cooler 12, and as the detected temperature lowers, the opening is increased to reduce the refrigerant pressure on the outlet side of the gas cooler 12. Suitable known means can be used as specific means for detecting the refrigerant temperature on the outlet side of the gas cooler 12 and adjusting the opening of the expansion valve 14.

As is apparent from FIG. 1, between the expansion valve 14 and the accumulator 17, the first evaporator 15 and the second evaporator 16 are arranged in series in this order without intervening any valve, and the two evaporators are capable of operating independently of each other. The first evaporator 15 is provided with a first blower 150, which includes a ventilation fan 151 and a fan motor 152 for rotating the fan 151, and an intake air selection damper 153, which can be operated to draw in fresh outside air. Similarly, the second evaporator 16 is provided with a second blower 160, which includes a ventilation fan 161 and a fan motor 162 for rotating the fan 161, and an intake air selection damper 163, which can be operated to draw in fresh outside air.

Since the first evaporator 15 and the second evaporator 16 are arranged in series as described above, when the compressor 11 is operated to circulate the refrigerant, the refrigerant flows through the first evaporator 15 and the second evaporator 16 alike. Accordingly, to operate both the first and second evaporators 15 and 16 or to operate either one can be controlled by controlling the on/off operation of the blowers 150 and 160 that blow air over the evaporators 15 and 16, respectively.

The energy that can be used for both the first and second evaporators 15 and 16 is determined by the difference between the energy of the refrigerant at the outlet side of the expansion valve 14 and the energy of the refrigerant at the inlet side of the accumulator 17. Since this energy difference is distributed according to the load of the first evaporator 15 and the load of the second evaporator 16, the order in which the first and second evaporators 15 and 16 are arranged does not result in any performance difference between them.

According to the embodiment, CO₂ is used as the refrigerant, and the opening of the expansion valve is controlled by sensing the temperature on the high-pressure side, but it will be recognized that the evaporators can also be operated by connecting them in series, even in a refrigeration cycle that uses a non-supercritical fluid as the refrigerant and that adjusts the opening of the expansion valve by sensing the temperature on the low-pressure side.

As described above, in the refrigeration cycle employed in the embodiment of the present invention, using a simple configuration in which the first evaporator 15 and the second evaporator 16 are connected in series, desired air conditioning can be provided by operating the two evaporators independently of each other.

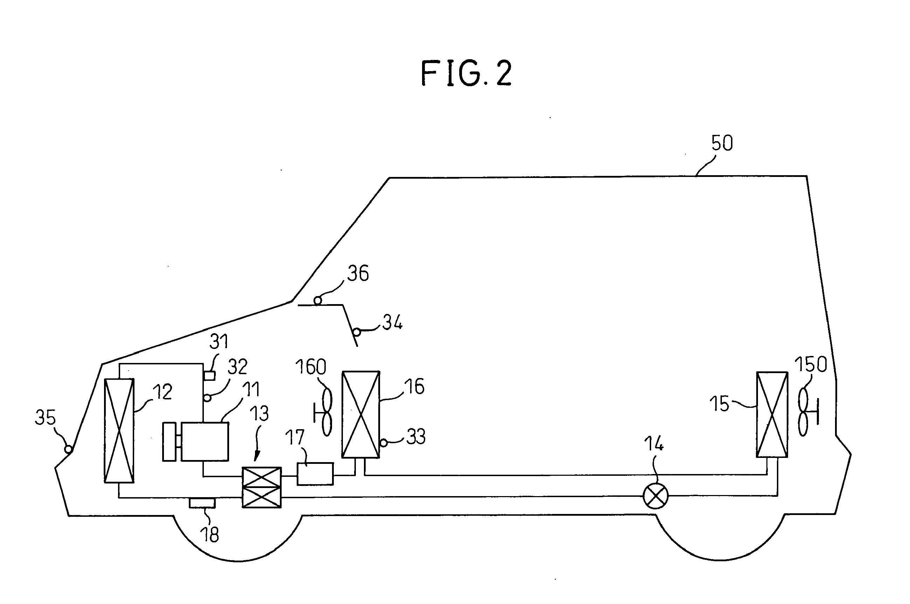

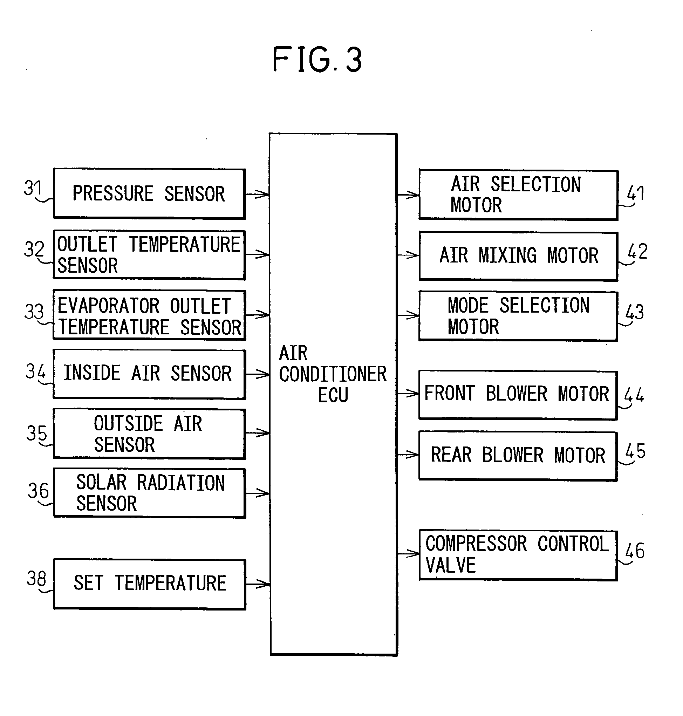

An automotive air conditioning system according to one embodiment of the present invention will be described with reference to FIGS. 2 and 3. The automotive air conditioning system of FIG. 2 employs the refrigeration cycle of FIG. 1, and is installed in a minivan-type passenger car 50. In FIG. 2, sensors necessary for controlling the air conditioning are shown, along with the refrigeration cycle of FIG. 1. In FIG. 2, the same components as those in FIG. 1 are designated by the same reference numerals as those used in FIG. 1.

The compressor 11, the gas cooler 12, the internal heat exchanger 13, and the accumulator 17 are located inside the engine compartment where the engine is mounted, while the second evaporator 16 is located inside the instrument panel at the forward end of the car compartment. The second evaporator 16 is used as a front-seat-area air conditioning unit for air-conditioning the front-seat-area, and is hereinafter referred to as the front-seat-area evaporator 16. The front-seat-area contains the driver's seat, and constitutes the main air-conditioning space in the car compartment. The expansion valve 14 and the first evaporator 15 connected to the expansion valve 14 are located in the rear section of the car 50. The first evaporator 15 is used as a rear-seat-area air conditioning unit for air-conditioning the rear-seat-area, and is hereinafter referred to as the rear-seat-area evaporator 15. The rear-seat-area contains the passenger seats in the rear section, and constitutes a sub-air-conditioning space in the car compartment.

In the front section of the car, an inside/outside air selection damper 163 for introducing outside air is installed which can be operated to introduce fresh outside air to the front-seat-area evaporator 16. An air-mix damper and a heater core (not shown) are installed directly downstream of the evaporator, and the outlet air temperature can be adjusted by controlling the air-mix damper. Further downstream in the air passage are located a defroster outlet, a face-level outlet, and a foot-level outlet (not shown), and the desired air outlet can be selected by operating an air outlet mode damper (not shown).

An air outlet opening and an air outlet mode damper (not shown) are also located directly downstream of the rear-seat-area evaporator 15, and cool air can be guided through an air duct (not shown) up to ceiling outlets through which cool air is discharged into the space above the heads of the rear seat passengers. The air conditioning equipment and its control, such as described above, are well known in the art, and therefore, a detailed description will not be given here.

FIG. 3 shows an air-conditioning ECU (Electronic Control Unit) as a control unit in the automotive air conditioning system of FIG. 2. Inputs to the air-conditioning ECU consist of signals from various sensors, as well as inputs that the vehicle occupant enters from the panel. A pressure sensor 31 is located downstream of the compressor 11, and detects the pressure of the refrigerant discharged from the compressor 11. An outlet temperature sensor 32 is located near the pressure sensor 31, and detects the temperature of the refrigerant discharged from the compressor 11. An evaporator output temperature sensor 33 is located near the evaporator 16, and detects the operating condition of the compressor. An inside air sensor 34 is installed, for example, on the instrument panel, and detects the temperature inside the passenger compartment. An outside air temperature 35 is installed, for example, on the front of the car, and detects outside air temperature. A solar radiation sensor 36 is installed on the instrument panel, and detects the amount of solar radiation entering through the windshield.

As shown in FIG. 3, the air-conditioning ECU outputs signals for controlling such components as a servo motor 41 for driving the inside/outside air selection damper, a servo motor 42 for driving the air-mix damper, a mode selection motor 43 for controlling the air outlets, a servo motor 44 for driving the blower 161 of the front-seat-side evaporator 16, a servo motor 45 for driving the blower 151 of the rear-seat-area evaporator 15, and a compressor control valve 46.

In automatic air conditioning mode, when an occupant enters a set temperature, i.e., the desired temperature, from a set temperature input part 38 located on the instrument panel, the air-conditioning ECU computes optimum control conditions based on the inputs from the various sensors, and adjusts the temperature, blower level, etc. by driving the servo motors 41, 42, and 43 and selecting inside or outside air and the air outlets while controlling the air mix. Further, by driving the front-seat-area or rear-seat-area blower, the front-seat-area or rear-seat-area air conditioning unit is operated to automatically provide optimum air conditioning.

In the automotive air conditioning system of the present embodiment, the rear-seat-area evaporator 15 is located upstream of the front-seat-area evaporator 16 in the refrigeration cycle. Generally, in a vehicle, the rear-seat-area air conditioning unit is less frequently used than the front-seat-area air conditioning unit. That is, when only one of the air conditioning units is operating, the air conditioning unit that is operating is, in most cases, the front-seat-area evaporator 16. In this case, the rear-seat-area evaporator 15 is only used as a refrigerant passage. In the refrigerant passage, the pressure loss of the refrigeration cycle is smaller when a refrigerant with low dryness, i.e., high humidity, flows than when a refrigerant with high dryness flows. Accordingly, in the present embodiment, the rear-seat-area evaporator 15 which, in many cases, is likely to be used merely as a refrigerant passage is placed upstream of the front-seat-area evaporator 16 to reduce the pressure loss.

Furthermore, the capacity of the evaporator 15 can be made relatively small because it is used for air-conditioning the sub-air-conditioning space; for example, the capacity can be made smaller than that of the evaporator 16 used for air-conditioning the main air-conditioning space. Further, the pressure loss of the evaporator 15 can be made relatively small, because it is used for air-conditioning the sub-air-conditioning space; for example, the pressure loss can be made smaller than the evaporator 16. As can also been seen from such structural differences between the evaporator 15 and the evaporator 16, there is an advantage in placing the evaporator 15 for air-conditioning the sub-air-conditioning space on the downstream side of the evaporator 16 for air-conditioning the main air-conditioning space.

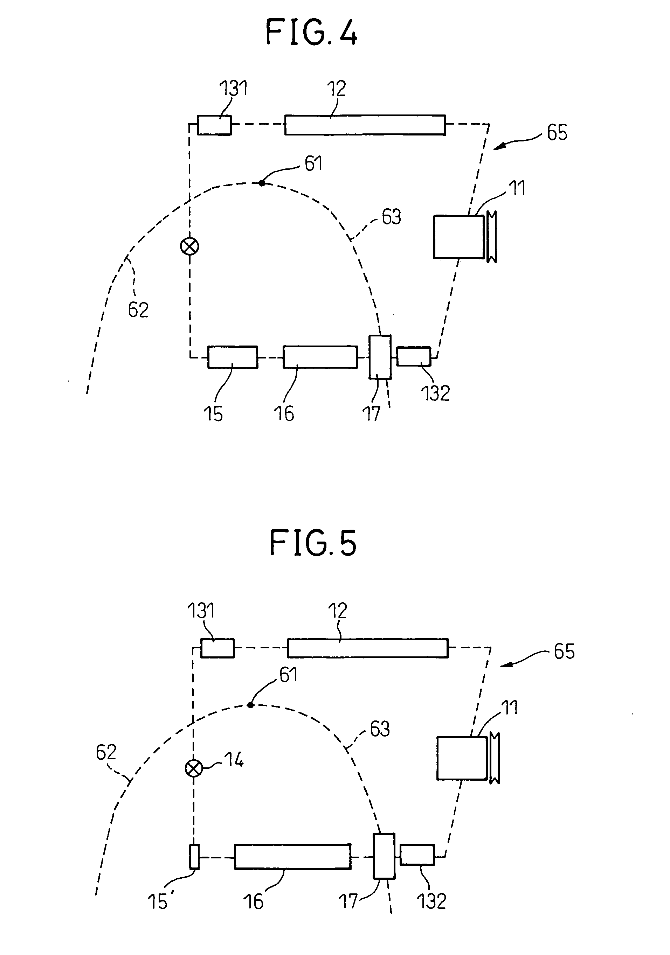

FIGS. 4 and 5 are explanatory diagrams each constructed by superimposing the refrigeration cycle of the present embodiment over a refrigeration cycle 65 on a Mollier diagram (enthalpy as abscissa and pressure as ordinate). FIG. 4 shows the case where both the rear-seat-area evaporator 15 and the front-seat-area evaporator 16 are operated, while FIG. 4 shows the case where the rear-seat-area evaporator 15 is not operated, but only the front-seat-area evaporator 16 is operated. The components in the refrigeration cycle are designated by the same reference numerals as those in FIG. 1.

In the refrigeration cycle 65 of FIG. 4, the refrigerant in gaseous state is compressed by the compressor 11, and the refrigerant thus compressed and heated to supercritical conditions is cooled by the gas cooler 12. Then, the high-pressure, high-temperature refrigerant is passed to the expansion valve 14 where the pressure is reduced, and the resulting gas-liquid two-phase refrigerant is vaporized through the rear-seat-side and front-seat-side evaporators 15 and 16, and the air to be flown into the compartment is cooled by utilizing the latent heat of vaporization. The diagram shows a saturated liquid line 62, a saturated vapor line 63, and its critical point 61. The region to the left of the saturated liquid line 62 is the supercooled liquid region, and the region to the right of the saturated vapor line 63 is the superheated gas region.

As shown in FIG. 5, when only the front-seat-area evaporator 16 is operated, the evaporator 15 is not used as an evaporator. That is, the blower 150 of the evaporator 15 is not operated. In this case, the evaporator 15 is used merely as a refrigerant passage 15'. Since the refrigerant passage 15' is close to the expansion valve 14, it can be seen that the dryness is low and the pressure loss is therefore also low.

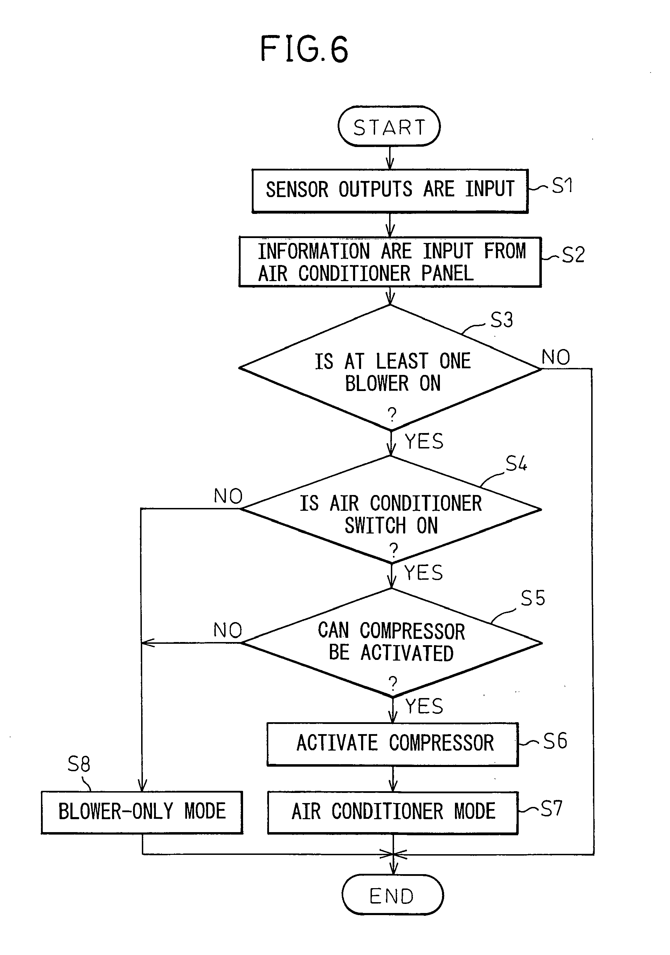

An air conditioner operation controlled by the air-conditioning ECU according to the present embodiment will be described below with reference to FIG. 6.

First, outputs from various sensors are input to the air-conditioning ECU (step S1), and information for various settings are entered by the vehicle occupant using the air conditioning setting panel (step S2).

When the input of information in steps S1 and S2 is completed, it is determined whether at least one blower switch is turned on or not (step S3). In the present embodiment, since there are two blowers, i.e., the front-seat-area blower 161 and the rear-seat-area blower 151, the following four ON/OFF combinations are possible for the blower switches.
(1) Front-seat-area blower 161 ON
   Rear-seat-area blower 151 ON
(2) Front-seat-area blower 161 ON
   Rear-seat-area blower 151 OFF
(3) Front-seat-area blower 161 OFF
   Rear-seat-area blower 151 ON
(4) Front-seat-area blower 161 OFF
   Rear-seat-area blower 151 OFF

When at least either the front-seat-area blower 161 or the rear-seat-area blower 151 is ON as in the above cases (1) to (3), this means that the air conditioning system is turned on. In the case (4), all the blowers are OFF, air is not blown into the compartment, and the air conditioning system is not operating. Therefore, the flow process is terminated.

In any one of the cases (1) to (3), the process proceeds to determine whether the air conditioner switch is ON or not (step S4). If the air conditioner switch is OFF, the compressor 11 is not activated, and the process is terminated after setting the mode to the blower-only mode in which only the blower(s) is operated (step S8). In the blower-only mode, air is blown into both the front seat and rear seat areas, or into only the front seat area or the rear seat area, depending on the respective cases (1) to (3).

If the air conditioner switch is ON, then it is determined whether the compressor 11 can actually be activated (step S5). At step S5, it is determined that the compressor 11 can be activated if the value of the pressure sensor 31 is higher than a predetermined value. This determination is made to check whether the heat exchange in the refrigeration cycle is possible or not. If the compressor 11 cannot be activated, then the mode is set to the blower-only mode to control the airflow.

If, in step S5, the compressor 11 can be activated, the compressor 11 is activated (S6). When the compressor is activated, the air conditioning operation on the front seat area and the rear seat area is determined according to the blower switch ON/OFF combination. That is, when the front-seat-area blower 161 and the rear-seat-area blower 151 are both ON as in the case (1), both the front-seat-area air conditioning unit and the rear-seat-area air conditioning unit are turned on; when only the front-seat-area blower 161 is ON as in the case (2), only the front-seat-area air conditioning unit is turned on; and when only the rear-seat-area blower 151 is ON as in the case (3), only the rear-seat-area air conditioning unit is turned on.

After the compressor 11 is activated, the air conditioning mode is entered, and the air conditioning operation continues while controlling the capacity of the compressor so as to match the target temperature.

When a front-seat-area air conditioner switch is provided as an air conditioner switch, provisions should be made to turn on the front-seat-area blower 160 and the compressor 11 when the front-seat-area air conditioner switch is turned on. Further, when a rear-seat-area air conditioner switch is provided, provisions should be made to turn on the rear-seat-area blower 150 and the compressor 11 when the rear-seat-area air conditioner switch is turned on.

While the above embodiment has been described by taking as an example the case where two evaporators are connected in series, it will be appreciated that three or more evaporators may be connected in series.

Further, in the above embodiment, the front-seat-area space has been set as the main air-conditioning space and the rear-seat-area space as the sub-air-conditioning space, but instead, the driver's seat may be set as the main air-conditioning space and the front passenger seat as the sub-air-conditioning space. Further, the refrigeration cycle having two evaporators can be applied to an air conditioner and a refrigerator or freezer mounted in a car. In this case, the entire compartment space or the space containing the driver's seat may be set as the main air-conditioning space and the refrigerator or freezer is set as the sub-air-conditioning space.

## Claims

1. An air conditioning system comprising:
a compressor compressing refrigerant;
a gas cooler cooling the refrigerant discharged from said compressor;
an expansion valve reducing the pressure of the refrigerant flowing from said gas cooler; and
a plurality of evaporators, connected in series and operable independently of each other, vaporizing the refrigerant flowing from said expansion valve.

2. An air conditioning system as claimed in claim 1, wherein the opening of said expansion valve is adjusted based on an outlet temperature of said gas cooler.

3. An air conditioning system as claimed in claim 1, further comprising a tank for storing surplus refrigerant, said tank being disposed on a low-pressure side between said expansion valve and said compressor.

4. An air conditioning system as claimed in claim 1, wherein said refrigerant is a fluid that reaches a supercritical pressure in said gas cooler.

5. An air conditioning system as claimed in claim 1, wherein said plurality of evaporators are respectively provided with blowers which are controlled independently of each other.

6. An air conditioning system as claimed in claim 1, wherein said air conditioning system is used for air-conditioning a vehicle, said plurality of evaporators include a first evaporator and a second evaporator, said first evaporator is installed so as to air-condition a sub-air-conditioning space in said vehicle, and said second evaporator is installed so as to air-condition a main air-conditioning space in said vehicle.

7. An air conditioning system as claimed in claim 6, wherein said main air-conditioning space is a front seat space in said vehicle, and said sub-air-conditioning space is a rear seat space in said vehicle.

8. An air conditioning system as claimed in claim 6, wherein said first evaporator is located upstream of said second evaporator in the flow of said refrigerant.

9. An air conditioning system as claimed in claim 1, further comprising an internal heat exchanger for exchanging heat between high-pressure refrigerant and low-pressure refrigerant.
